**Europäisches Patentamt**

**European Patent Office**

**Office européen des brevets**

(19)

(11) Veröffentlichungsnummer: **0 443 632 A1**

# (12) EUROPÄISCHE PATENTANMELDUNG

(21) Anmeldenummer: **91104582.1**

(22) Anmeldetag: **24.11.88**

(51) Int. Cl.⁵: **D01H 1/06, D01H 7/22**

Diese Anmeldung is am 23 - 03 - 1991 als Teilanmeldung zu der unter INID-Kode 60 erwähnten Anmeldung eingereicht worden.

(30) Priorität: **08.12.87 DE 3741430**

(43) Veröffentlichungstag der Anmeldung:
**28.08.91 Patentblatt 91/35**

(60) Veröffentlichungsnummer der früheren Anmeldung nach Art. 76 EPÜ: **0 319 783**

(84) Benannte Vertragsstaaten:
**CH DE FR IT LI**

(71) Anmelder: **Zinser Textilmaschinen GmbH**
**Hans-Zinser-Strasse**
**W-7333 Ebersbach/Fils(DE)**

(72) Erfinder: **Grau, Gerhard**
**Hohlenmatten 18**
**W 7840 Müllheim 13(DE)**
Erfinder: **Derichs, Josef**
**Bonhoefferstr. 12**
**W 4050 Mönchengladbach(DE)**

(74) Vertreter: **Wilhelm & Dauster Patentanwälte**
**European Patent Attorneys**
**Hospitalstrasse 8**
**W-7000 Stuttgart 1(DE)**

(54) **Spinnvorrichtung.**

(57) Bei einer Spinnvorrichtung mit einer eine Spule (10) aufnehmenden, angetriebenen Spindel (12) und mit einer die Spule übergreifenden, über ihren unteren Rand das ersponnene Garn auf die Spule aufwindenden Glocke (14) ist eine schaltbare Bremsvorrichtung (15) für die Glocke (14) vorgesehen, die während des Aufwindens des Fadens immer dann zum Einsatz kommt, wenn das Aufwindemoment reduziert wird.

Fig. 35.

EP 0 443 632 A1

Die Erfindung betrifft eine Spinnvorrichtung mit einer eine Spule aufnehmenden, angetriebenen Spindel und mit einer die Spule übergreifenden, über ihren unteren Rand das ersponnene Garn auf die Spule aufwindenden Glocke, die mit einer einstellbaren Bremseinrichtung versehen ist.

Bei konstanter Spindeldrehzahl ändern sich die Aufwindeverhältnisse und insbesondere das Aufwindemoment bei der Erzeugung eines in üblicher Weise aufgebauten Spinnkops in Abhängigkeit von dem jeweiligen Durchmesser, mit welchem die Aufwindung erfolgt. Bei großen Aufwindedurchmessern muß entsprechend die Glocke schneller rotieren als bei kleinen Durchmessern. Bei einem Übergang von einem großen Aufwickeldurchmesser zu kleineren Aufwickeldurchmessern besteht außerdem die Gefahr, daß die Glocke aufgrund ihrer Massenträgheit zunächst etwas voreilt, wodurch die Fadenspannung unter Umständen auf ein unzulässiges Maß reduziert wird. Um diesen Einfluß der Massenträgheit der Glocke etwas zu korrigieren, ist es bekannt (DE-A 34 00 327), eine ständig wirksame Bremseinrichtung für die Glocke vorzusehen. Dies führt einerseits zu einem erhöhten Leistungsbedarf während andererseits unter Umständen erhebliche Schwankungen in der Fadenspannung bestehen bleiben.

Der Erfindung liegt die Aufgabe zugrunde, bei einer Spinnvorrichtung der eingangs genannten Art die Aufwindeverhältnisse und insbesondere die Fadenspannungsschwankungen zu vergleichmäßigen oder wenigstens zu glätten.

Diese Aufgabe wird dadurch gelöst, daß eine die Bremswirkung der Bremseinrichtung während des Aufwindens des Garns bei Änderung des Aufwindemomentes zu niederen Werten veranlassende Schaltung vorgesehen ist.

Durch eine derartige geschaltete Bremseinrichtung kann der Einfluß der Massenträgheit der Glocke bei dem Übergang von großen Aufwindedurchmessern zu kleineren Aufwindedurchmessern gedämpft oder nahezu vollständig eliminiert werden. Als Bremseinrichtung können praktisch alle bekannten Bremselemente zum Einsatz kommen, sofern sie schaltbar und zweckmäßigerweise auch in ihrer Bremswirkung einstellbar sind. Beispielsweise ist es möglich, elektrische Bremseinrichtungen, beispielsweise Wirbelstrombremsen oder auch Magnetbremsen oder mechanische Bremsen oder pneumatische Bremsen vorzusehen. Um Spitzen in der Fadenspannung abzuschleifen oder zu glätten ist es zweckmäßig, wenn die Bremseinrichtung entsprechend phasenverschoben ein- und ausgeschaltet wird.

In weiterer Ausgestaltung der Erfindung wird vorgesehen, daß die Bremseinrichtung in Abhängigkeit von den Aufwindeverhältnissen ein- und ausschaltbar und/oder in ihrer Bremswirkung veränderbar ist. Das Aufwindemoment kann über die Fadenspannung direkt gemessen oder insbesondere indirekt über die Position und die Bewegungsrichtung des anhebbaren und absenkbaren Bauteils, d.h. der Glocke oder der Spindel, ermittelt werden.

In weiterer Ausgestaltung der Erfindung wird vorgesehen, daß die Bremseinrichtung in Abhängigkeit von der Fadenspannung ein- und ausschaltbar und/oder in der Bremswirkung veränderbar ist. Dies kann nach einem vorgegebenen Programm als ein Steuervorgang oder aber auch unter Erfassung der jeweils vorhandenen Fadenspannung als ein Regelvorgang durchgeführt werden.

Weitere Merkmale und Vorteile der Erfindung ergeben sich aus der nachfolgenden Beschreibung der in der Zeichnung dargestellten Ausführungsform und den Erläuterungen anhand von Diagrammen.

Fig. 1     zeigt ein schematisches Schaltbild für eine Steuerung von Einzelmotoren einen Glocke und einen Spindel, wobei unterschiedliche Betriebszustände berücksichtigt werden, und

Fig. 2     in einen Diagramm die Drehzahlen der Spindel und der Glocke über der Zeit.

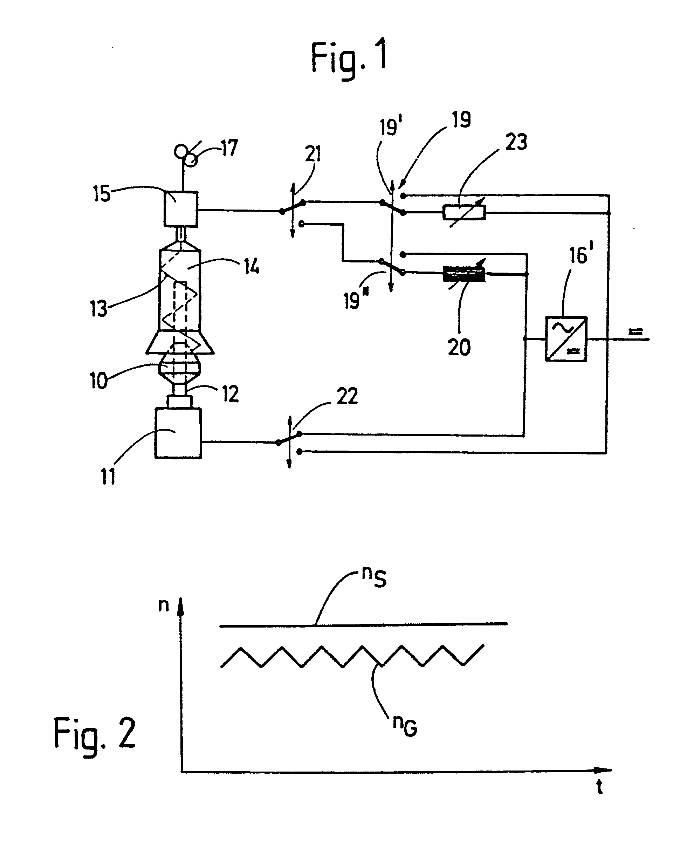

In der Fig. 1 ist nur eine einzelne Spinnvorrichtung dargestellt. Eine Spinnmaschine besteht aus einer Vielzahl derartiger Spinnvorrichtungen, die auf einer oder zwei Maschinenseiten in einer Reihe nebeneinander angeordnet sind. Die Spinnvorrichtung enthält eine Spindel (12), die von einem Einzelmotor (11) angetrieben ist, für den ein Asynchronmotor verwendet wird. Auf die Spindel (12) ist eine Spulenhülse aufgesteckt, auf die eine Spule (10) aus Garn aufgewunden wird.

Die Spule (10) wird von einer koaxial zur Spindel (12) angeordneten Glocke (14) übergriffen, die ebenfalls von einem Einzelmotor (15) angetrieben wird. Dieser Einzelmotor (15) ist als ein Asynchronmotor ausgeführt. Die Glocke (13) besitzt einen koaxial zur Spindel (12) verlaufenden Fadenzuführkanal, der unterhalb des Einzelmotors (15) nach außen zu dem Glockenmantel geführt ist, auf welchem dann das Garn (13) in Spiralen zu dem unteren Rand der Glocke (14) läuft. Das Garn (13) wird über den unteren Rand der Glocke (14) auf die Spule (10) aufgewunden. Die Glocke (14) oder die Spindel wird in nicht dargestellter Weise zu einer Hubbewegung angetrieben, die der üblichen Hubbewegung an der Ringspinnmaschine entspricht und die dort in der Regel von der Ringbank durchgeführt wird. Dadurch wird eine Spinnspule (10) mit üblichem Aufbau erzeugt. Das zu verspinnende Fadenmaterial wird dem Zuführkanal der Glocke (14) über ein Streckwerk zugeführt, von welchem das Lieferwalzenpaar (17) angedeutet ist.

Wie in dem Diagramm in Fig. 2 dargestellt ist, läuft die Spindel (12) mit konstanter Spindeldrehzahl (ns). Die Glocke (14) läuft mit einer etwas geringeren Drehzahl (ng), die der Aufwickelgeschwindigkeit entspricht. Abhängig von dem jeweiligen Aufwickeldurchmesser auf der Spule (10) ändert sich dabei das Aufwickelmoment und damit auch die Glockendrehzahl (ng), wie dies ebenfalls in Fig. 2 dargestellt ist. Die Glocke (14) wird somit regelmäßig zwischen einer minimalen Drehzahl und einer maximalen Drehzahl beschleunigt und verlangsamt.

Bei der Spinnvorrichtung nach Fig. 1, ist die Spindel (12) mit einem als Asynchronmotor ausgebildeten Einzelmotor (11) und die Glocke (14) mit einem ebenfalls als Asynchronmotor ausgebildeten Einzelmotor (15) angetrieben. Die Einzelmotoren (11, 15) dieser Spinnvorrichtung (ebenso wie die Einzelmotoren aller Spinnvorrichtungen einer Maschine) sind an eine Frequenzsteuereinrichtung (16') angeschlossen, die ihrerseits an eine Gleich-stromversorgung angeschlossen ist. Die Einzelmo-toren (11, 15) sind über Umschalter (21, 22) außerdem direkt an die Gleichstromversorgung anschließbar. Dadurch ist es möglich, die Einzelmotoren (11, 15) zu bremsen. In der Versorgung des Einzelmotors (15) liegt noch ein weiterer Umschalter (19), der zwei gleichzeitig schaltende Schaltelemente (19', 19") aufweist. Das Schaltelement (19") schaltet zwischen zwei parallelen, zu der Frequenzsteuereinrichtung (16') führenden Leitungen, von denen eine eine einstellbare Drossel (20) enthält. Das Schaltelement (19') schaltet zwischen zwei ebenfalls parallelen, zu der Gleichstromversorgung führenden Leitungen, von denen eine einen einstellbaren Widerstand oder eine einstellbare Drossel (23) enthält.

Die in Fig. 1 dargestellte Stellung der Umschaltelemente (19, 21, 22) entspricht dem Betriebszustand während des Spinnens. Die Einzelmotoren (11 und 15) werden von der Frequenzsteuereinrichtung (16') mit einem Wechselstrom einer vorgegebenen Frequenz gespeist. Das Umschaltelement (19") ist auf die die Drossel (20) enthaltende Leitung geschaltet, so daß der Einzelmotor (15) eine "weiche" Drehmoment-Drehzahl-Kennlinie aufweist. Entsprechend ist das Umschaltelement (19') auf die dem Widerstand oder die Drossel (23) enthaltende Leitung zu der Gleichstromversorgung geschaltet, so daß eine "weiche" Bremsung erhalten wird. Die Umschalteinrichtung (22) ist so geschaltet, daß der Einzelmotor (11) angetrieben wird. Das Umschaltelement (21) ist auf die zur Gleichstromversorgung führende Leitung geschaltet, so daß eine "weiche" Bremsung für den Einzelmotor (15) erhalten wird. Diese Schaltstellung des Umschaltelementes (21) wird eingeschaltet, wenn sich der Aufwindedurchmesser der Spule (10) von dem größten Durchmesser hin zu kleineren Durchmessern ändert. Wenn dann nach Erreichen des kleinsten Aufwindedurchmessern sich das Aufwindemoment wieder ändert, wird entsprechend das Umschaltelement (21) umgesteuert, so daß dann der Einzelmotor (15) "weich" angetrieben ist. Das Umschalten des Schaltelementes (21) wird beispielsweise abhängig von der Hubbewegung der Glocke (14) oder der Spindel (12) gesteuert, deren Bewegung den Aufwindedurchmesser und damit das Aufwindemoment bestimmt. In der Praxis wird vorgesehen, daß das Umschalten des Umschaltelementes (21) etwas phasenverschoben gegenüber den tatsächlichen Aufwindedurchmessern erfolgt, so daß damit Spannungsspitzen abgeschliffen werden können.

Um einen möglichst "steilen" Antrieb bei dem Anlaufen der Spinnvorrichtung für die Glocke (14) zu erreichen, wird das Schaltelement (19") auf die die Drossel (20) umgehende Leitung geschaltet, so daß mit einer entsprechend "steifen" Drehmoment-Drehzahl-Kennlinie angetrieben wird. Um ein möglichst rasches Abbremsen bei dem Stillsetzen der Spinnvorrichtung zu erhalten, wird das Schaltelement (19') entsprechend auf die den Widerstand oder die Drossel (23) umgehende Leitung geschaltet.

Die Drossel (20) und der Widerstand oder die Drossel (23) sind einstellbar, so daß sie auf vorgegebene Werte eingestellt werden können. In Abwandlung der dargestellten Ausführungsform wird vorgesehen, daß die Drossel (20) und/oder (23) mit einem Verstellelement versehen ist, das während des Antreibens der Glocke und/oder während des Bremsens der Glocke eine Anpassung des Drehmomentes und/oder des Bremsmomentes an den Geschwindigkeitsverlauf vornimmt. Der Verlauf der Glockendrehzahl (ng) ist in Fig. 2 nur schematisch dargestellt. In der Praxis verläuft die Drehzahl zwischen den Minima und den Maxima natürlich nicht gradlinig, so daß für einen möglichst weitgehenden Ausgleich eine entsprechende Anpassung über die Drosseln (20, 23) vorgenommen werden kann.

Bei dem Erspinnen von Garnen mit einer ausreichenden Reißfestigkeit wird es in den meisten Fällen nicht notwendig sein, die Glocke (14) anzutreiben. Die Festigkeit des ersponnenen Garns (13) reicht dann aus, die Glocke (14) auch bei hohen Geschwindigkeiten mitzuschleppen. Dagegen wird es auch in diesen Fällen zweckmäßig sein, wenn die Glocke bei dem Ändern des Aufwindemoments zu niederen Werten hin abgebremst wird, damit sie nicht aufgrund ihrer Massenträgheit voreilt und die Spannung des entstehenden Garns (13) in zu starkem Maße reduziert. In diesem Fall genügt es, für die Glocke (14) eine Bremseinrichtung vorzusehen, beispielsweise eine elektrische Bremseinrichtung entsprechend dem Einzelmotor (15). Diese Bremseinrichtung kann entsprechend "weich" eingestellt werden. Darüber hinaus ist es möglich, eine derartige elektrische Bremseinrichtung nicht nur periodisch einzuschalten, sondern auch an die jeweiligen nicht linearen Geschwindigkeitsverhältnisse anzupassen. Anstelle einer elektrischen Bremseinrichtung können dann selbstverständlich auch mechanische oder pneumatische oder sonstige Bremseinrichtungen eingesetzt werden, die entsprechend periodisch ein- und ausschaltbar und gegebenenfalls zusätzlich noch in ihrer Wirkung dosierbar sind. Auch in diesen Fällen ist es sinnvoll, wenn eine gewisse Phasenverschiebung auftritt, so daß Spannungsspitzen abgeschliffen werden können.

In Abwandlung der dargestellten Ausführungsform werden als Einzelmotoren (11) für die Spindeln (12) Synchronmotoren vorgesehen, so daß sich schon alleine aufgrund des Schlupfes des als Asynchronmotor ausgebildeten Einzelmotors (15) der Glocke (14) ein Drehzahlunterschied einstellt, der dann durch das Auslegen mit einer "weichen" Drehmoment-Kennlinie verstärkt wird.

## Patentansprüche

1. Spinnvorrichtung mit einer eine Spule (10) aufnehmenden, angetriebenen Spindel (12) und mit einer die Spule übergreifenden, über ihren unteren Rand ein ersponnenes Garn auf die Spule aufwindenden Glocke (14), die mit einer einstellbaren Bremseinrichtung (15) versehen ist, dadurch gekennzeichnet, daß eine die Bremswirkung der Bremseinrichtung während des Aufwindens des Fadens bei einer Änderung des Aufwindemomentes zu niederen Werten veranlassende Schaltung (19', 21, 23) vorgesehen ist.

2. Spinnvorrichtung nach Anspruch 1, dadurch gekennzeichnet, daß die Bremseinrichtung (15) periodisch ein- und ausschaltbar ist.

3. Spinnvorrichtung nach Anspruch 1 oder 2, dadurch gekennzeichnet, daß die Stärke der Bremswirkung der Bremseinrichtung (15) veränderbar ist.

4. Spinnvorrichtung nach einem der Ansprüche 1 bis 3, dadurch gekennzeichnet, daß die Bremseinrichtung (15) in einen Regelkreis eingebaut ist, der Mittel zum Erfassen der Fadenspannung enthält.

5. Spinnvorrichtung nach Anspruch 4, dadurch gekennzeichnet, daß die Bremswirkung der Bremseinrichtung (15) in Abhängigkeit von der Fadenspannung veränderbar ist.

6. Spinnvorrichtung nach einem der Ansprüche 1 bis 3, dadurch gekennzeichnet, daß die Bremseinrichtung abhängig von einem vorher ermittelten und dann vorgegebenen Verlauf der Fadenspannung gesteuert ist.

# Fig. 1

# Fig. 2

**Europäisches Patentamt**

**EUROPÄISCHER RECHERCHENBERICHT**

Nummer der Anmeldung

**EP 91 10 4582**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 225 660 (CERIT SPA) <br> * Spalte 8, Zeile 40 - Zeile 42 * <br> – – – | 1 | D 01 H 1/06 <br> D 01 H 7/22 |
| A,D | DE-A-3 400 327 (ZINSER) <br> * Seite 8, Zeile 7 - Zeile 17; Abbildungen * <br> – – – | 1 | |
| A | GB-A-2 088 907 (HEBERLEIN HISPANO) <br> – – – | | |
| E | EP-A-0 331 639 (VIGNON) <br> * Spalte 2, Zeile 56 - Spalte 3, Zeile 27 * * Anspruch 1 * <br> – – – – – | 1 | |

**RECHERCHIERTE SACHGEBIETE (Int. Cl.5)**

D 01 H

**Der vorliegende Recherchenbericht wurde für alle Patentansprüche erstellt**

| Recherchenort | Abschlußdatum der Recherche | Prüfer |
|---|---|---|
| Den Haag | 04 Juni 91 | RAYBOULD B.D.J. |